# DEMANDE DE BREVET EUROPEEN

(11) **EP 2 110 545 A1**
(43) Date de publication de la demande: **21.10.2009**
(21) Numéro de dépôt: 09157810.4
(22) Date de dépôt: 10.04.2009
(51) Int. Cl.: F03B 1/04, F03B 3/00, F03B 11/00

(54) **Organe de machine hydraulique à bord renforcé contre l'abrasion et machine hydraulique mettant en oeuvre un tel organe**

(30) Priorité: 14.04.2008 FR 0852485
(71) Demandeur: Alstom Hydro France, 92300 Levallois Perret (FR)
(72) Inventeur: Prigent, Serge, 38700 Le Sappey en Chartreuse (FR)
(74) Mandataire: Myon, Gérard Jean-Pierre

(57) **Abrégé**

Cet organe de machine hydraulique est traversée par au moins un écoulement d'eau et comprend au moins une surface mouillée qui s'étend entre deux bords de l'organe, l'un au moins des bords de l'organe et une partie de la surface mouillée adjacente étant renforcés et formés par au moins un élément massif amovible en matériau présentant une résistance élevée à l'abrasion.

## Description

La présente invention concerne les machines hydrauliques et plus particulièrement les organes de ces dernières placés directement au contact de l'écoulement d'eau dont l'énergie doit être convertie.

Au sens de la présente invention, une machine hydraulique peut être une turbine, une pompe ou une turbine-pompe utilisée, par exemple, dans une usine de production d'électricité. Dans le cas d'une turbine, la machine est placée en aval d'une conduite alimentée directement par un cours d'eau ou à partir d'un réservoir dans lequel se déverse un ou plusieurs cours d'eau. En fonction de la nature des terrains traversés par le cours d'eau et des conditions météorologiques, l'eau alimentant la machine est susceptible de contenir des particules abrasives telles que par exemple du sable ou des sédiments. Lorsque ces particules abrasives traversent la turbine, elles usent les surfaces mouillées par l'écoulement d'eau et imposent leurs réparations ou leurs remplacements à intervalles réguliers. Ces réparations entraînent des coûts d'exploitation de la machine hydraulique relativement importants liés à la fois au coût des pièces à changer ainsi qu'au temps d'immobilisation de la machine.

Il existe donc un besoin d'augmenter la longévité des organes de machines hydrauliques soumis à l'action des particules abrasives ainsi que de faciliter la réparation des zones usées de ces organes.

Afin d'atteindre ces objectifs, l'invention concerne un organe de machine hydraulique traversée par au moins un écoulement d'eau, organe hydraulique comprenant au moins une surface mouillée qui s'étend entre deux bords de l'organe, **caractérisé en ce que** l'un au moins des bords de l'organe et une partie de la surface mouillée adjacente sont renforcés et formés par au moins un élément massif amovible en matériau présentant une résistance élevée à l'abrasion.

La mise en oeuvre d'un tel élément massif amovible au niveau d'un des bords au moins de la surface mouillée de l'organe de la machine hydraulique permet d'augmenter la résistance de ce dernier dans une région où l'usure est particulièrement accentuée en raison de la nature tourbillonnaire de l'écoulement d'eau. La présence d'un élément massif, soit au sens de l'invention, d'un élément monolithique présentant des dimensions à l'échelle centimétrique et de préférence supérieure au demi centimètre, permet d'obtenir une zone, d'une part, plus résistante à l'usure compte tenu de la nature du matériau constitutif de l'élément massif amovible et, d'autre part, présentant une plus grande longévité. En effet, l'élément amovible peut supporter des zones d'usure plus profondes que celles autorisées par les revêtements appliqués traditionnellement et présentant des épaisseurs inférieures à 500 micromètres. Par ailleurs, les dépôts actuels dépendent de la qualité du support. Or, les composants hydrauliques sont généralement réalisés par fonderie, ils peuvent présenter des défauts débouchant qui réduisent la durée de vie des revêtements actuels. L'élément massif selon l'invention présente quant à lui des caractéristiques de durée de vie qui sont indépendantes de la qualité du support. De plus, le caractère amovible de l'élément massif permet un changement rapide de ce dernier, ce qui induit des temps d'immobilisation de la machine hydraulique très nettement inférieurs à ceux induits par la réfection d'une machine hydraulique lorsqu'il est nécessaire de remplacer ou rénover les surfaces d'usure jusqu'à présent protégées au moyen de revêtements projetés.

Selon une caractéristique de l'invention, l'organe hydraulique comprend des moyens de fixation de l'élément massif amovible adaptés pour assurer une mise en compression d'une partie au moins de l'élément massif amovible. Une telle mise en compression présente l'avantage d'augmenter les caractéristiques de résistance mécanique de l'élément massif amovible notamment lorsque ce dernier est réalisé en céramique technique.

Selon une autre caractéristique de l'invention, l'organe hydraulique comprend plusieurs éléments massifs amovibles juxtaposés de manière à former le bord renforcé de l'organe hydraulique. La mise en oeuvre de plusieurs éléments massifs juxtaposés permet de réaliser des formes complexes développables ou gauches. De plus, cela permet de remplacer les éléments indépendamment les uns des autres en fonction de leur état.

Selon l'invention, différentes parties fonctionnelles de l'organe hydraulique sont susceptibles d'être concernées par une réalisation sous la forme d'un ou plusieurs éléments massifs amovibles. Ainsi, selon une caractéristique de l'invention le bord renforcé est un bord d'attaque de l'organe hydraulique.

Selon une autre caractéristique de l'invention le bord renforcé est un bord de fuite de l'organe hydraulique.

Bien entendu, un organe hydraulique selon l'invention peut comprendre à la fois un bord d'attaque et un bord de fuite ainsi que tout autre bord réalisé au moyen d'éléments massifs amovibles.

Afin d'offrir une résistance élevée à l'abrasion et d'obtenir une grande longévité du ou des éléments massifs amovibles mis en oeuvre, selon une caractéristique de l'invention, chaque élément massif amovible est réalisé en matériau présentant une dureté Vickers supérieure ou égale à 1000 Hv.

Selon encore une autre caractéristique de l'invention, le matériau constitutif de chaque élément massif est choisi parmi les céramiques techniques comprenant une matrice métallique dans laquelle sont dispersées des particules ou une poudre, d'un matériau dur résistant à l'abrasion. La matrice métallique peut par exemple être choisie parmi les alliages suivants CoCr, NiCr, NiFe BSi tandis que le matériau constitutif de la poudre peut être choisi parmi : le diamant, le Niture de Bore, le Carbure de Tungstène (WC), les alliages du type SiC, Al₂O₃ ou des mélanges de ceux-ci.

Chaque élément massif sera par exemple obtenu, selon les technologies connues de métallurgie des poudres, par compression et frittage.

Selon l'invention, l'organe hydraulique est susceptible de constituer différentes parties de machine hydraulique de types variés. Il sera toutefois noté que l'invention concerne plus particulièrement les machines hydrauliques de forte puissance et de grande taille pour lesquelles les débits nominaux sont généralement supérieurs à 1 m³/s.

Ainsi, selon une forme de réalisation de l'invention, l'organe de machine hydraulique est destiné à former une pointe de régulation du débit d'une buse de turbine Pelton et comprend un corps sur lequel sont empilés les éléments massifs amovibles dont un premier possède une forme générale annulaire avec une surface externe de forme générale tronconique et un dernier possède une forme de pointe tronconique avec un diamètre nominal inférieur au diamètre nominal du premier élément massif amovible. Selon une variante de réalisation, les moyens de fixation sont adaptés pour assurer une mise en compression de tous éléments amovibles sauf le dernier. Ainsi, les moyens de fixation pourront être adaptés pour exercer une traction sur le dernier élément massif amovible de manière qu'il assure une mise en compression d'une partie au moins du premier élément massif. Cette mise en compression d'au moins un des éléments massifs induit une précontrainte qui contribue à en augmenter les caractéristiques mécaniques par rapport aux caractéristiques mécaniques de ce même élément au repos dans un état non précontraint. Ainsi la mise en compression d'un élément massif selon l'invention augmente notamment sa résistance aux impacts occasionnels de particules de dimensions supérieures à 300µm et ainsi que sa résistance au martelage c'est à dire aux impacts fréquents de particules de dimensions inférieures à 200µm.

Selon une autre forme de réalisation de l'invention, l'organe hydraulique est destiné à former un nez d'une buse de turbine Pelton et il comprend, d'une part, un corps comprenant un alésage traversant et, d'autre part, l'élément massif amovible qui est adapté dans l'alésage traversant et possède une forme générale annulaire de manière à former un orifice d'éjection hydraulique et un siège d'appui pour une pointe de régulation du débit de la buse, l'élément massif étant ceinturé par une frette assurant une mise compression de l'élément massif.

Selon encore une autre forme de réalisation, l'organe hydraulique est destiné à former un auget d'une roue de turbine Pelton et il comprend au moins un élément massif amovible central formant le bord d'attaque d'une arrête centrale de l'auget et au moins deux éléments massifs amovibles latéraux formant chacun une partie d'un bord de fuite latéral de l'auget.

Selon une autre forme de réalisation, l'organe hydraulique est destiné à former une roue de turbine Francis ou de turbine réversible et les éléments massifs amovibles forment au moins un bord de labyrinthe.

L'invention concerne également une machine hydraulique comprenant au moins un organe hydraulique selon l'invention.

Bien entendu, les diverses caractéristiques et variantes de l'organe hydraulique et de la machine selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description ci-dessous effectuée en référence aux dessins annexés qui illustrent différentes formes de réalisation non limitatives d'un organe selon l'invention pour machine hydraulique.

La figure 1 est une coupe axiale d'une buse d'injecteur pour turbine Pelton mettant en oeuvre des organes hydrauliques selon l'invention.

La figure 2 est une coupe axiale d'un organe selon l'invention formant le nez de la buse illustrée à la figure 1.

La figure 3 est une coupe axiale d'une autre forme de réalisation d'un organe hydraulique selon l'invention destiné à former la pointe de régulation du débit de la buse de turbine Pelton tel qu'illustrée à la figure 1.

La figure 4 illustre une variante de réalisation de la pointe de régulation telle qu'illustrée à la figure 3.

La figure 5 est une section d'un organe hydraulique selon l'invention formant un auget pour une roue de turbine Pelton.

La figure 6 est une coupe schématique axiale d'une machine hydraulique selon l'invention de type turbine Francis dont la roue est un organe hydraulique conforme à l'invention.

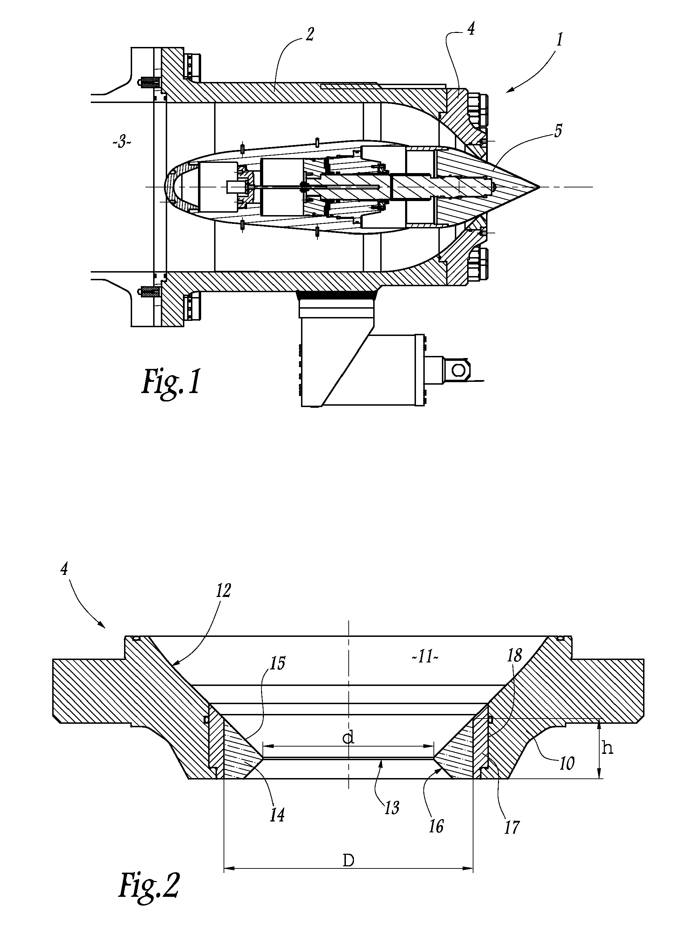

L'invention vise donc à proposer un organe de machine hydraulique dont certaines parties de la surface mouillée et, plus particulièrement, un bord au moins est constitué par un élément massif amovible présentant une résistance élevée à l'abrasion. Afin de fixer les idées, un tel organe va être tout d'abord décrit dans le cadre d'une mise en oeuvre pour une buse d'injection de turbine Pelton illustrée à la figure 1 et désignée dans son ensemble par la référence 1, étant entendu qu'un organe selon l'invention peut être mis en oeuvre pour diverses autres types de machines hydrauliques.

A la figure 1, seule la buse d'injection 1 de la turbine Pelton est représentée, sachant que le mode de réalisation générale d'une turbine Pelton, à savoir sa roue et les différents accessoires nécessaires pour sa mise en oeuvre sont largement connus de l'homme du métier et ne nécessitent donc pas de plus amples explications. De manière générale, une buse d'injection 1 de turbine Pelton présente un corps 2 de forme générale cylindrique qui délimite un canal 3 d'amenée d'un flux d'eau en provenance d'une conduite forcée non représentée. L'extrémité du canal 3 est alors définie par un nez de buse 4 constitué ici par un organe hydraulique conforme à l'invention.

Afin d'assurer une régulation du débit d'eau au travers du nez 4, la buse 1 comprend en outre une pointe de régulation 5 mobile en translation entre une position de fermeture de la buse telle qu'illustrée à la figure 1 dans laquelle la pointe est en appui contre le nez 4, et une position rétractée ou d'ouverture, non représentée, dans laquelle la pointe 5 se trouve à distance du nez 4 de manière à laisser passer l'eau d'entraînement de la turbine. La position relative de la pointe 5 par rapport au nez 4 permettant alors de moduler le débit d'eau. Selon l'exemple illustré, la pointe de régulation 5 est également formée par un organe hydraulique selon l'invention.

Le nez de buse 1 formant un organe de machine hydraulique selon l'invention, comprend un corps 10, qui présente un alésage traversant 11 dont la surface interne 12 est mouillée par l'eau d'alimentation de la turbine. L'alésage interne 11 présente une forme convergente depuis l'intérieur du canal 3 vers l'extérieur et plus particulièrement vers un orifice d'éjection 13. Selon l'exemple illustré, le bord de la surface mouillée 12 qui définit l'orifice 13 est formé par un élément massif amovible 14 réalisé dans un matériau présentant une grande résistance à l'abrasion. L'élément 14 présente une forme générale annulaire avec l'orifice d'éjection 13 qui est délimité par une partie interne 15 convergente et une partie externe 16 divergente. L'élément massif 14 est par exemple réalisé selon les techniques de métallurgie des poudres de manière à constituer un élément monolithique en céramique technique comprenant une matrice métallique dans laquelle est dispersée une poudre de renfort constituée d'un ou plusieurs matériaux durs résistant à l'abrasion.

Afin d'augmenter les résistances mécaniques de l'élément 14, ce dernier comprend en tant que moyen de fixation, une frette 17 qui le ceinture. La frette 17 est alors réalisée de manière à venir s'enchâsser dans un alésage 18 de forme complémentaire aménagé sur le corps 10. L'ajustement de la frette 17 dans l'alésage 18 est réalisé de manière à permettre une extraction de l'ensemble qu'elle forme avec l'élément massif 14 pour permettre un remplacement de ce dernier. La frette 17 est adaptée sur l'élément massif 14 selon une technique d'emmanchement à chaud de sorte que, lors de son refroidissement, la frette 17 assure une mise en compression de l'élément massif 14 et contribue ainsi à en augmenter les caractéristiques métalliques, notamment de résistance aux chocs. Dans le cas illustré, l'élément massif présente une hauteur h de l'ordre de 10 cm, un diamètre extérieur D de l'ordre de 30 cm et un diamètre interne d de l'ordre de 20 cm.

La pointe de régulation 5 est également constituée par un organe dont un bord et une partie au moins de la surface mouillée sont renforcés conformément à l'invention. Ainsi, la pointe 5 comprend un corps 20 à symétrie de révolution d'axe Δ dont la surface extérieure forme une succession de portées cylindriques et annulaires de diamètre décroissant. La pointe 5 comprend en outre quatre éléments massifs amovibles 21 à 24. Le premier élément amovible 21 présente une forme générale annulaire avec un alésage central cylindrique de forme complémentaire à celle du corps 20 de manière à venir s'emboîter sur ce dernier sans possibilité de déplacement radial. Les éléments massifs amovibles intermédiaires 22 et 23 présentent une forme très proche voire analogue à celle du premier élément amovible 21 avec toutefois un diamètre nominal décroissant. Le dernier élément massif amovible 24 présente quant à lui une forme générale de pointe tronconique. La surface extérieure de chacun des éléments amovibles 21 à 24 est réalisée de manière que, par leur empilage, ils définissent une surface sensiblement continue de forme générale tronconique. De plus, le dernier élément amovible 24, une fois fixé sur le corps 20, bloque tout déplacement axial de l'empilage d'éléments amovibles massifs 20 à 24. Afin d'assurer sa fixation, le dernier amovible 24 présente un noyau 25 au centre duquel est réalisé un taraudage 26 de réception d'une vis de fixation 27 engagée dans un alésage extrême 28 du corps 20. Le noyau 25 et la vis 27 sont réalisés de manière que la traction exercée par la vis 27 induisent une mise en compression du premier élément amovible 21 et des deux éléments amovibles intermédiaires 22 et 23. A cet effet, les dimensions du corps 20 et la forme de base des éléments intermédiaires 22 et 23 sont définies pour que la pression exercée par le noyau 26 se reporte exclusivement sur les éléments amovibles 21, 22 et 23. Le corps 20 assure alors uniquement un guidage axial des éléments intermédiaires 22 et 23.

Il sera noté que le premier élément amovible 21 forme un bord proximal de la pointe 5 tandis que le dernier élément amovible forme un bord distal de cette même pointe.

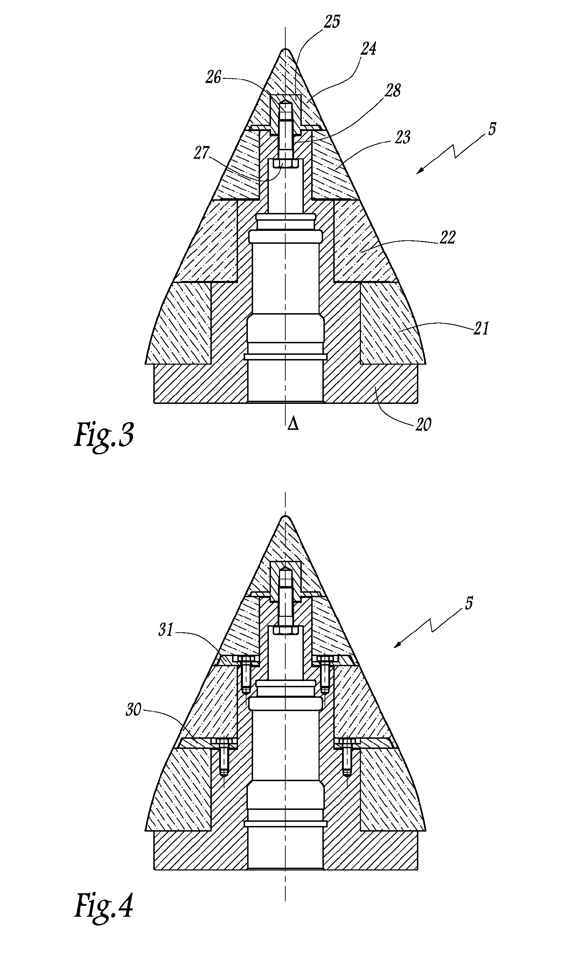

Bien entendu, il pourrait être envisagé d'assurer une mise en compression des éléments amovibles 21 à 23 d'une manière différente. Ainsi, la figure 4 illustre une variante de réalisation de la pointe 5 selon laquelle il est mis en place pour le premier élément amovible 21 et l'élément amovible intermédiaire 22 des bagues de compression 30 et 31 qui assurent une mise en compression de l'élément amovible correspondant. Cette mise en compression ou précontrainte augmente la résistance mécanique de chaque élément massif par rapport à celle qu'il présenterait au repos.

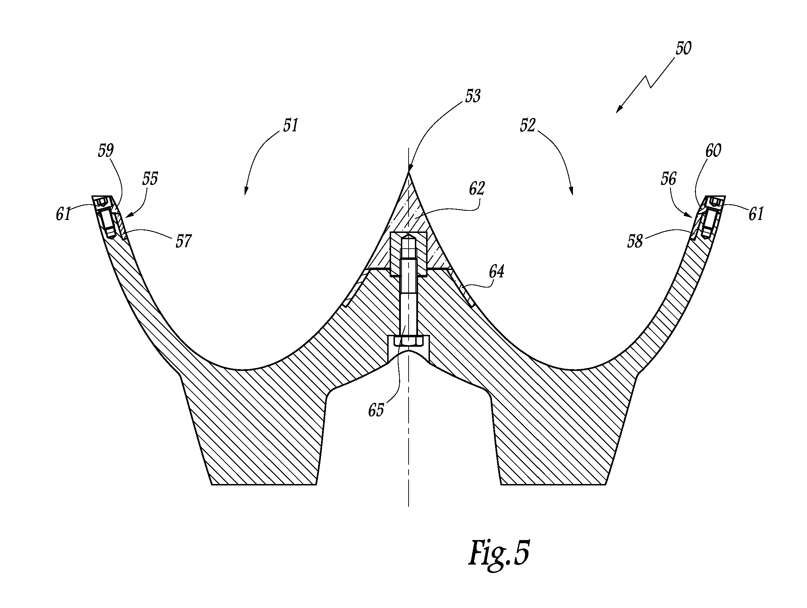

Un organe selon l'invention peut également constituer un auget 50, tel qu'illustré à la figure 5, de roue de turbine Pelton. De manière classique, l'auget 50 présente deux demi-godets séparés par une arête centrale 53 formant le bord d'attaque de l'auget 50. Chacun des demi godet 51 et 52 présente à l'opposé de l'arête centrale 53 une arête latérale, respectivement 55 et 56, formant les bords de fuite latéraux de l'auget 50. Selon l'exemple illustré, l'auget 50 comprend alors deux éléments massifs amovibles 57 et 58 en matériau résistant à l'abrasion. Les éléments 57 et 58 forment la partie de la surface interne, des demi-godets 51 et 52, adjacente au bord de fuite 55, 56. Chaque élément massif amovible 57 et 58 est alors immobilisé par un autre élément massif amovible, respectivement 59 et 60, en matériau présentant une grande résistance à l'abrasion qui forme le bord de fuite du demi auget correspondant. Chaque élément massif amovible 59, 60 est alors fixé aux moyens de vis 61 qui le mettent en partie en compression, ainsi que l'élément massif amovible adjacent 57, 58. De la même manière, l'arête centrale 53 est formée par un élément massif amovible 62 en matériau présentant une grande résistance à l'abrasion qui possède une forme de coin et qui vient comprimer deux éléments massifs amovibles 63, 64 en forme de plaquettes qui définissent une partie de la surface, des demi-godets 51 et 52, adjacente à l'arête centrale 63. L'élément amovible 62 est alors fixé au moyen de vis de traction 65 traversant le corps de l'auget 50. La mise en oeuvre des éléments massifs amovibles 57 à 63 permet alors d'augmenter la résistance de l'auget 50 à l'abrasion lorsque l'eau, qui vient le frapper, est chargée en particules solides.

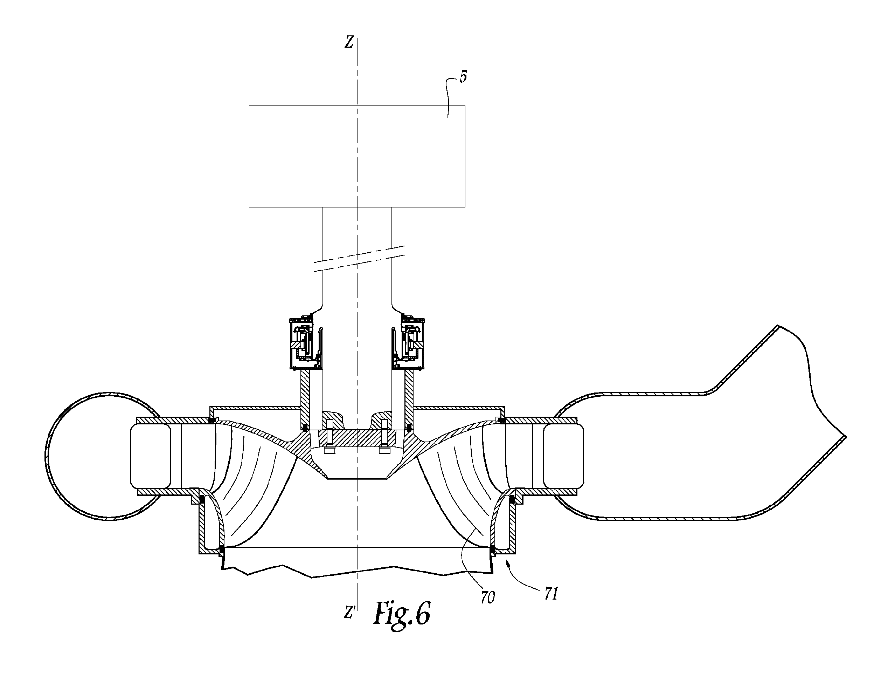

Bien entendu, un organe hydraulique, selon l'invention, n'est pas nécessairement mis en oeuvre dans le cadre d'une turbine Pelton mais peut également être mis en oeuvre dans le cadre d'une autre machine comme par exemple une turbine Francis telle qu'illustrée à la figure 6. Selon cet exemple, l'organe hydraulique selon l'invention constitue une roue Francis 70 dont les bords au niveau du labyrinthe d'étanchéité inférieur 71 sont définis par une succession d'éléments massifs amovibles.

Bien entendu, diverses autres modifications peuvent être apportées aux organes hydrauliques selon l'invention dans le cadre des revendications.

## Revendications

1. Organe de machine hydraulique traversée par au moins un écoulement d'eau, organe hydraulique comprenant au moins une surface mouillée (12) qui s'étend entre deux bords de l'organe, **caractérisée en ce que** l'un au moins des bords de l'organe et une partie de la surface mouillée adjacente sont renforcés et formés par au moins un élément massif amovible (14, 21, 22, 23, 24) en matériau présentant une résistance élevée à l'abrasion.

2. Organe selon la revendication 1, **caractérisé en ce qu'**il comprend des moyens de fixation (17, 27, 30, 31) de l'élément massif amovible (14, 21, 22, 23, 24) adaptés pour assurer une mise en compression d'une partie au moins de l'élément massif amovible.

3. Organe selon la revendication 1 ou 2, **caractérisé en ce qu'**il comprend plusieurs éléments massifs amovibles (21, 22, 23, 24) juxtaposés de manière à former le bord renforcé de l'organe hydraulique.

4. Organe selon l'une des revendication 1 à 3, **caractérisé en ce que** le bord renforcé est un bord d'attaque (53) de l'organe hydraulique.

5. Organe selon l'une des revendications 1 à 4, **caractérisé en ce que** le bord renforcé est un bord de fuite (55, 56) de l'organe hydraulique.

6. Organe selon l'une des revendications 1 à 5, **caractérisé en ce que** chaque élément massif amovible est réalisé en matériau présentant une dureté Vickers supérieure ou égale à 1000 Hv.

7. Organe selon l'une des revendications 1 à 6, **caractérisé en ce que** le matériau constitutif de chaque élément massif est une céramique technique comprenant une matrice métallique dans laquelle est dispersée une poudre d'un ou plusieurs matériaux durs résistant à l'abrasion.

8. Organe selon la revendication 2 et l'une des revendications 3 à 7, **caractérisé en qu'**il est destiné à former une pointe de régulation (5) du débit d'une buse de turbine Pelton et comprend un corps (20) sur lequel sont empilés les éléments massifs amovibles (21 à 24) dont un premier (21) possède une forme générale annulaire avec une surface externe de forme générale tronconique et un dernier (24) possède une forme de pointe tronconique avec un diamètre nominal inférieur au diamètre nominal du premier élément massif amovible, les moyens de fixation étant adaptés pour exercer une traction sur le dernier élément massif amovible de manière qu'il assure une mise en compression d'une partie au moins du premier élément massif.

9. Organe selon la revendication 2 et l'une des revendications 3 à 7, **caractérisé en qu'**il est destiné à former un nez (4) d'une buse de turbine Pelton et en ce qu'il comprend, d'une part, un corps (10) comprenant un alésage traversant (11) et, d'autre part, l'élément massif amovible (14) qui est adapté dans l'alésage traversant et possède une forme générale annulaire de manière à former un orifice (13) d'éjection hydraulique et un siège d'appui pour une pointe (5) de régulation (2) du débit de la buse, l'élément massif (14) étant ceinturé par une frette (17) assurant une mise compression de l'élément massif.

10. Organe selon l'une des revendications 1 à 7, **caractérisé en ce qu'**il est destiné à former un auget (50) d'une roue de turbine Pelton et **en ce qu'**il comprend au moins un élément massif amovible central (62) formant le bord d'attaque d'une arrête centrale (53) de l'auget et au moins deux éléments massifs amovibles latéraux (59, 60) formant chacun une partie d'un bord de fuite latéral (55, 56) de l'auget.

11. Organe selon l'une des revendications 1 à 7, **caractérisé en ce qu'**il forme une roue (70) de turbine Francis ou de turbine réversible et **en ce que** les éléments massifs amovibles forment au moins un bord de labyrinthe (71).

12. Machine hydraulique comprenant au moins un organe hydraulique selon l'une des revendications 1 à 11.
